# EUROPÄISCHE PATENTSCHRIFT

(11) **EP 1 004 941 B1**
(45) Veröffentlichungstag und Bekanntmachung des Hinweises auf die Patenterteilung: **18.05.2005**
(21) Anmeldenummer: 99122641.6
(22) Anmeldetag: 13.11.1999
(51) Int. Cl.: G03G 9/09, G03G 9/12, C09D 5/03, C09D 11/02, B41M 5/00, C09D 11/00, G02B 5/20

(54) **Verwendung von Mischkristallpigmenten der Chinacridonreihe in elektrophotographischen Tonern und Entwicklern und Ink-Jet-Tinten**
Use of mixed crystals of pigments on the basis of quinacridones in electrophotographic toners or developers and ink-jet-inks
Utilisation de cristaux mixtes de pigments à base de quinacridones dans des révélateurs et agents de développement électrophotographiques et encres d'impression par jet

(30) Priorität: 26.11.1998 DE 19854571
(43) Veröffentlichungstag der Anmeldung: 31.05.2000
(73) Patentinhaber: Clariant GmbH, 65929 Frankfurt am Main (DE)
(72) Erfinder: Baur, Rüdiger, Dr., 65817 Eppstein (DE); Urban, Manfred, 65205 Wiesbaden (DE); Macholdt, Hans-Tobias, Dr., 64297 Darmstadt-Eberstadt (DE); Schnaitmann, Dieter, Dr., 65817 Eppstein (DE); Böhmer, Martin, 61267 Neu-Anspach (DE)

(56) Entgegenhaltungen:
- EP-A- 0 655 485
- EP-A- 0 799 862
- EP-A- 0 896 034
- DATABASE WPI Section Ch, Week 199815 Derwent Publications Ltd., London, GB; Class A60, AN 1998-163742 XP002130965 & JP 10 030062 A (DAINIPPON INK & CHEM INC), 3. Februar 1998 (1998-02-03)

## Beschreibung

Die vorliegende Erfindung betrifft den Einsatz neuartiger Mischkristallpigmente in elektrophotographischen Tonern und Entwicklern, und Ink-Jet-Tinten.

Bei elektrophotographischen Aufzeichnungsverfahren wird auf einem Photoleiter ein "latentes Ladungsbild" erzeugt. Dieses "latente Ladungsbild" wird durch Aufbringen eines elektrostatisch geladenen Toners entwickelt, der dann beispielsweise auf Papier, Textilien, Folien oder Kunststoff übertragen und beispielsweise mittels Druck, Strahlung, Hitze oder Lösungsmitteleinwirkung fixiert wird. Typische Toner sind Ein- oder Zweikomponentenpulvertoner (auch Ein- oder Zweikomponenten-Entwickler genannt), darüberhinaus sind noch Spezialtoner, wie z.B. Magnet- oder Flüssigtoner, Latextoner und Polymerisationstoner, im Einsatz.

Ein Maß für die Tonerqualität ist seine spezifische Aufladung q/m (Ladung pro Masseeinheit). Neben Vorzeichen und Höhe der elektrostatischen Aufladung ist vor allem das schnelle Erreichen der gewünschten Ladungshöhe und die Konstanz dieser Ladung über einen längeren Aktivierzeitraum hinweg ein entscheidendes Qualitätskriterium. Darüberhinaus ist die Unempfindlichkeit des Toners gegen Klimaeinflüsse, wie Temperatur und Luftfeuchtigkeit, ein weiteres wichtiges Eignungskriterium.

Sowohl positiv als auch negativ aufladbare Toner finden Verwendung in Fotokopierern, Laserdruckern, LED-(Light emitting diods), LCS-(Liquid crystal shutter)-Druckem oder anderen digitalen Druckern auf elektrophotographischer Basis, in Abhängigkeit vom Verfahrens- und Gerätetyp.

Um elektrophotographische Toner oder Entwickler mit entweder positiver oder negativer Aufladung zu erhalten, werden häufig Ladungssteuermittel zugesetzt. Als farbgebende Komponente werden in Bunttonern typischerweise organische Farbpigmente eingesetzt. Farbpigmente haben gegenüber Farbstoffen wegen ihrer Unlöslichkeit im Anwendungsmedium erhebliche Vorteile, wie z.B. bessere Thermostabilität und Lichtechtheit.

Aufbauend auf dem Prinzip der "subtraktiven Farbmischung" kann mit Hilfe der drei Primärfarben Gelb, Cyan und Magenta das gesamte für das menschliche Auge sichtbare Farbspektrum wiedergegeben werden. Nur wenn die jeweilige Primärfarbe den genau definierten farblichen Anforderungen genügt, ist eine exakte Farbwiedergabe möglich. Andernfalls können einige Farbtöne nicht wiedergegeben werden und der Farbkontrast ist nicht ausreichend.

Bei Vollfarbtonern müssen die drei Toner Gelb, Cyan und Magenta neben den genau definierten farblichen Anforderungen auch hinsichtlich ihrer triboelektrischen Eigenschaften exakt aufeinander abgestimmt sein, da sie nacheinander im gleichen Gerät übertragen werden.

Von Farbmitteln ist bekannt, daß sie die triboelektrische Aufladung von Tonern teilweise nachhaltig beeinflussen können. Wegen der unterschiedlichen triboelektrischen Effekte von Farbmitteln und des daraus resultierenden teilweise sehr ausgeprägten Einflusses auf die Toneraufladbarkeit ist es nicht möglich, die Farbmittel in eine einmal erstellte Tonerbasisrezeptur einfach hinzuzufügen. Vielmehr kann es notwendig werden, für jedes Farbmittel eine eigene Rezeptur zu erstellen, für welche Art und Menge des benötigten Ladungssteuermittels speziell zugeschnitten werden. Dieses Vorgehen ist entsprechend aufwendig und kommt dann bei Farbtonem für Prozeßfarbe noch zusätzlich zu den bereits vorher beschriebenen Schwierigkeiten dazu.

Darüber hinaus ist für die Praxis wichtig, daß die Farbmittel eine hohe Thermostabilität und eine gute Dispergierbarkeit besitzen. Typische Einarbeitungstemperaturen für Farbmittel in die Tonerharze liegen bei Verwendung von Knetern oder Extrudern zwischen 100°C und 200°C. Dementsprechend ist eine Thermostabilität von 200°C, besser 250°C, von großem Vorteil. Wichtig ist auch, daß die Thermostabilität über einen längeren Zeitraum (ca. 30 Minuten) und in verschiedenen Bindemittelsystemen gewährleistet ist. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination.

Grundsätzlich besteht Bedarf an Bunt-Pigmenten, die eine möglichst hohe Transparenz, gute Dispergierbarkeit und einen geringen elektrostatischen, wenn möglich neutralen triboelektrischen, Eigeneffekt besitzen. Unter einem neutralen triboelektrischen Eigeneffekt wird verstanden, daß das Pigment möglichst keine Auswirkung auf die elektrostatische Eigenaufladung des Harzes zeigt und einer definierten Ladungseinstellung, z.B. durch Ladungssteuermittel, leicht folgt.

Die Transparenz ist von zentraler Bedeutung, weil beim Vollfarbkopieren oder Drucken die Farben Gelb, Cyan und Magenta übereinander kopiert oder gedruckt werden, wobei die Reihenfolge der Farben vom Gerät abhängt. Ist nun eine oben liegende Farbe nicht transparent genug, so kann die darunter liegende nicht ausreichend durchscheinen und die Farbwiedergabe ist verzerrt. Beim Kopieren oder Drucken auf Overhead-Folien ist die Transparenz noch bedeutsamer, da hier mangelnde Transparenz auch nur einer Farbe die gesamte Bildprojektion grau erscheinen läßt.

Die europäische Patentanmeldung EP-A-896 034, die unter Art. 54(3) EPC fällt, beschreibt die Verwendung von Mischkristallpigmenten der Chinacridonreihe als Farbmittel in Lacken.

Der vorliegenden Erfindung lag die Aufgabe zugrunde, Buntpigmente für den Einsatz in elektrophotographischen Tonern und Entwicklern, Ink-Jet-Tinten, Farbfiltern und Elektretfasern zur Verfügung zu stellen, die den vorstehenden Anforderungen genügen.

Die Aufgabe wurde überraschenderweise durch die Verwendung nachstehend definierter Chinacridon-Mischkristalle gelöst.

Gegenstand der vorliegenden Erfindung ist die Verwendung von Mischkristallpigmenten der Chinacridonreihe bestehend aus
a) 85 bis 99 Gew.-%, insbesondere 87 bis 95 Gew.-%, an unsubstituiertem Chinacridon der β-Phase der allgemeinen Formel (I), 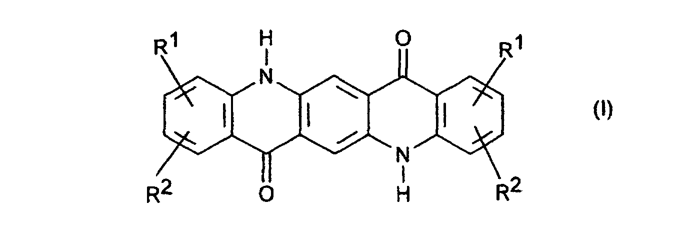 in welcher R¹ und R² Wasserstoffatome bedeuten und
b) 1 bis 15 Gew.-%, insbesondere 5 bis 13 Gew.-%, eines oder mehrerer substituierter Chinacridone der allgemeinen Formel (I), worin die Substituenten R¹ und R² gleich oder verschieden sind und Chlor-, Brom- oder Fluoratome oder
   C₁-C₄-Alkyl-, C₁-C₄-Alkoxy- oder Carbonamidgruppen, die durch C₁-C₆-Alkylgruppen substituiert sein können, und R¹ zusätzlich Wasserstoff sein kann, bedeuten, als Farbmittel in elektrophotographischen Tonern und Entwicklern, Ink-Jet-Tinten, Elektretfasern und Farbfiltern.

Chinacridon-Mischungen aus 85 bis 99 Gew.-% unsubstituiertem Chinacridon der β-Phase und 1 bis 15 Gew.-% von ein oder mehreren, insbesondere 1 oder 2, verschieden substituierten Chinacridonen bilden unter bestimmten Bedingungen Mischkristalle, auch feste Lösungen genannt. Unter Mischkristallen versteht man, daß eine oder mehrere, meist in einem nicht stöchiometrischen Verhältnis zu einer Kristallphase zugesetzte Komponente(n) und die Wirtsverbindung in einem gemeinsamen Gitter kristallisieren. Das Röntgenbeugungsdiagramm eines Mischkristalls zeigt nur die Reflexe des - manchmal aufgeweiteten - Kristallgitters der Wirtsverbindung oder eines ähnlichen oder auch eines deutlich anderen Kristallgitters, während im Röntgenbeugungsdiagramm der entsprechenden mechanischen Mischung die Reflexe aller Komponenten auftreten.

In den erfindungsgemäß verwendeten Mischkristallpigmenten sind solche substituierte Chinacridone (b) der Formel (I) bevorzugt, worin R¹ Wasserstoff, Chloratome, Methyl- oder Carbonamidgruppen, und R² Chloratome, Methyl oder Carbonamidgruppen bedeuten.

Die coloristischen Eigenschaften der erfindungsgemäßen Mischkristallpigmente unterscheiden sich erheblich von denen der entsprechenden mechanischen Mischungen der Einzelkomponenten. Sie besitzen insbesondere reinere Farbtöne und weisen höhere Farbstärken auf. Außerdem werden Farbtöne erhalten, die mit den Einzelkomponenten oder den im Stand der Technik bekannten Mischkristallen nicht eingestellt werden können, insbesondere im Rotviolettbereich. Die Echtheiten sind ausgezeichnet.

Die vorstehend beschriebenen Mischkristallpigmente können hergestellt werden, indem man die der Verbindung a) zugrundeliegende 2,5-Dianilino-terephthalsäure und die der Verbindung (b) zugrundeliegende(n) substituierte(n) Terephthalsäure(n) im Verhältnis 85 : 15 bis 99 : 1, insbesondere 87 : 13 bis 95 : 5, in Gegenwart von Polyphosphorsäure und/oder Polyphosphorsäureestem cyclisiert, das nach der Cyclisierung vorliegende Ringschlußgemisch bei einer Temperatur von mindestens 110 °C, bevorzugt 110 bis 180 °C, besonders bevorzugt 135 bis 165 °C, mit Wasser oder verdünnter Phosphorsäure unter Druck hydrolysiert und anschließend das Mischkristallpigment, gegebenenfalls nach einem Feinverteilungsschritt und/oder nach einer Finishbehandlung, isoliert.

Als Ringschlußmittel wird im allgemeinen die 3- bis 10fache Menge, vorzugsweise die 3- bis 5fache Menge, Polyphosphorsäure oder -methylester, bezogen auf die Dianilinoterephthalsäure, eingesetzt. Der P₂O₅-Gehalt der Polyphosphorsäure oder des -esters liegt zwischen 80 und 85 Gew.-%, vorzugsweise zwischen 83 und 85 Gew.-%, entsprechend einem Phosphorsäureäquivalent von 110 bis 120 %. Größere Mengen an Ringschlußmittel können verwendet werden, dies ist aber im allgemeinen nicht erforderlich. Die Ringschlußtemperatur beträgt im allgemeinen 80 bis 150 °C, vorzugsweise 120 bis 140 °C. Bei der Ringschlußreaktion können auch inerte Lösungsmittel, wie z. B. aromatische Kohlenwasserstoffe, zugegen sein. Die Zeit bis zur vollständigen Cyclisierung beträgt im allgemeinen 0,5 bis 24 Stunden, meist jedoch nur 1 bis 2 Stunden.

Die nach der Cyclisierung vorliegenden Ringschlußgemische werden bei einer Temperatur von mindestens 110 °C mit Wasser oder verdünnter Phosphorsäure, gegebenenfalls in Gegenwart eines unter den Reaktionsbedingungen inerten organischen Lösemittels, z. B. aromatische Kohlenwasserstoffe, unter Druck hydrolysiert. Für die Hydrolyse wird Wasser oder verdünnte Phosphorsäure verwendet. Dabei wird das Ringschlußgemisch unter Druck in das Wasser oder die verdünnte Phosphorsäure eindosiert. Es kann aber auch umgekehrt verfahren werden. Die Hydrolyse kann kontinuierlich oder diskontinuierlich durchgeführt werden. Vorteilhafterweise wird sie kontinuierlich in einem statischen Mischer durchgeführt. Im allgemeinen wird, bezogen auf die Polyphosphorsäure, die 2- bis 10fache Menge Wasser oder verdünnte Phosphorsäure eingesetzt. Die Dauer der Hydrolyse ist abhängig von der Dosiergeschwindigkeit der Ringschlußschmelze, beispielsweise 0,5 bis 24 Stunden, vorzugsweise 0,5 bis 5 Stunden.

Durch die Wahl der Dianilinoterephthalsäuren, der Ringschluß- und der Hochtemperaturhydrolysebedingungen werden gebrauchsfähige Mischkristallpigmente bereits unmittelbar nach der Hydrolyse erhalten, die nach üblichen Methoden isoliert werden können. Es kann vorteilhaft sein, die so erhaltenen feinteiligen Mischkristalle (im vorliegenden Sprachgebrauch dann "Präpigmente") einer Finishbehandlung bei erhöhten Temperaturen zu unterwerfen, oder es entstehen zunächst grobkristalline Mischkristallrohpigmente, die vorteilhaft einer mechanischen Feinverteilung unterworfen werden, und direkt oder nach einer Finishbehandlung in eine gebrauchsfähige Pigmentform überführt werden.

Die Mischkristallpräpigmente werden, gegebenenfalls nach einer Zwischenisolierung, einer Nachbehandlung mit oder ohne Zusatz von Lösemitteln bei einer Temperatur von 50 bis 200 °C unterworfen und nach der Abtrennung des flüssigen Mediums isoliert. Das flüssige Medium kann vorzugsweise einen alkalischen pH-Wert, z. B. pH 7,5 bis 13, haben.

Die grobkristallinen Mischkristallrohpigmente werden einer mechanischen Feinverteilung unterworfen und anschließend die dabei erhaltenen Mischkristallpigmente in üblicher Weise isoliert oder die dabei erhaltenen Mischkristallpräpigmente werden, gegebenenfalls nach einer Zwischenisolierung, einer Finishbehandlung, wie vorstehend beschrieben, unterworfen und nach der Abtrennung des flüssigen Mediums isoliert. Die Feinverteilung kann durch Trocken- oder durch Naßmahlung erfolgen. Bevorzugt wird eine Naßmahlung mit hohem Energieeintrag durchgeführt, weil hierzu das Mischkristallrohpigment nicht getrocknet werden muß. Für die Trockenmahlung eignen sich alle diskontinuierlichen und kontinuierlichen Schwing- oder Rollmühlen und für die Naßmahlung alle diskontinuierlichen und kontinuierlichen Rührwerkskugel-, Roll- und Schwingmühlen sowie Kneter.

Zur Verbesserung der coloristischen Eigenschaften und zur Erzielung bestimmter coloristischer Effekte können an einer beliebigen Stelle des Verfahrens Lösemittel, Pigmentdispergatoren, oberflächenaktive Mittel, Entschäumer, Extender oder andere Zuschlagstoffe zugesetzt werden. Es können auch Mischungen dieser Zusatzstoffe verwendet werden.

Oberflächenaktive Mittel, die bei dem Verfahren zur Anwendung kommen, sind beispielsweise kationische, anionische oder nichtionische Tenside, vorzugsweise Fettsäuretauride, Fettsäuresarkoside, Fettalkoholpolyglykolether, Fettalkoholpolyglykolester, Alkylpolyglykolethersulfate, Alkylphenolpolyglykolether, Alkansulfonsäuren sowie ihre Salze, Alkylphenylsulfonsäuren sowie ihre Salze und Alkylphenolpolyglykolethersulfate.

Als Pigmentdispergatoren die bei dem Verfahren zur Anwendung kommen können, werden Verbindungen mit der allgemeinen Formel (II)

P ― Xm (II)

eingesetzt, in der
- P: für einen m-wertigen Rest eines linearen Chinacridons der allgemeinen Formel (I) steht, in dem R¹ und R² gleich sind und Wasserstoffatome oder Methylgruppen darstellen,
- X: eine Gruppe der Formel (III)

-COOM (III)

oder eine Gruppe der Formel (IV)

SO₃M (IV)

darstellt, worin
- M: das Wasserstoffion H⁺ oder das Äquivalent M^{r+}/r eines r-wertigen Metallkations bezeichnet, wobei r für den betreffenden Fall dann übereinstimmend eine der Zahlen 1, 2 oder 3 ist, wie z.B. Li¹⁺, Na¹⁺, K¹⁺, Mg²⁺, Ca²⁺+, Sr²⁺, Ba²⁺, Mn²⁺, Cu²⁺, Ni²⁺, Co²⁺, Zn²⁺, Fe²⁺, Al³⁺, Cr³⁺ oder Fe³⁺; oder ein Ammoniumion oder Alkylammoniumion definiert, oder
- X: eine Phthalimidomethylengruppe oder eine Sulfonamidgruppe bedeutet.

Pro Gewichtseinheit Mischkristall-Rohpigment, -Präpigment oder -Pigment können zweckmäßigerweise insgesamt zwischen 0,1 und 20 Gew.-%, vorzugsweise 3 bis 10 Gew.-%, oberflächenaktive Mittel und/oder Pigmentdispergatoren zugesetzt werden.

Bevorzugte organische Lösemittel, die in einem oder mehreren Schritten des Herstellungsverfahrens zum Einsatz kommen können, sind Alkanole, insbesondere Ethanol, Propanole, Butanole und Pentanole; aliphatische Carbonsäureamide, insbesondere Formamid oder Dimethylformamid; cyclische Carbonsäureamide, insbesondere N-Methylpyrrolidon; aromatische Kohlenwasserstoffe wie z. B. Toluol, Xylole oder Ethylbenzol; aromatische Chlorkohlenwasserstoffe wie z. B. Chlorbenzol oder o-Dichlorbenzol.

Es war überraschend und nicht vorhersehbar, daß durch die Hochtemperaturhydrolyse reine Mischkristallpigmente erhalten werden, während nach den Angaben der US-PS 3 160 510 nur dann Chinacridonmischkristall-pigmente (und keine Mischungen) entstehen, wenn das unsubstituierte Chinacridon in deutlich geringerem Anteil als bei der vorliegenden Erfindung enthalten ist. Außerdem entstehen nach den Angaben der US-PS 4 099 980 bei der Solvolyse von Ringschlußgemischen mit der obigen Zusammensetzung Mischkristallpigmente in der γ-Phase des unsubstituierten Chinacridons, während nach dem vorliegenden Verfahren Mischkristallpigmente entstehen, die in der β-Phase vorliegen.

Die nach der vorliegenden Erfindung erhältlichen Mischkristallpigmente zeichnen sich durch ihre hervorragenden coloristischen und rheologischen Eigenschaften aus, insbesondere durch eine hohe Flockungsstabilität, eine leichte Dispergierbarkeit, ein gutes Glanzverhalten und eine hohe Farbstärke.

Im Vergleich zu den bisher bekannten Mischkristallen, wie beispielsweise in EP-A2-247 576, in EP 0 822 460 oder EP 0 827 039, führt die Verwendung der vorliegenden Chinacridon-Mischkristalle zu deutlich verbesserten coloristischen Eigenschaften im Toner. Der Toner zeigt bei gleicher Pigmenteinsatzkonzentration höhere Farbstärke, höhere Transparenz und der Farbton ist reiner. Die elektrostatische Beeinflussung des Bindemittelsystems ist gering und ermöglicht damit eine leichte Feinjustierung der gewünschten triboelektrischen Aufladung, zum Beispiel durch Ladungssteuermittel.

Weiterhin führt die umweltfreundliche Herstellung des Farbmittels zu einer günstigeren Gesamt-Ökobilanz des Farbtoners.

Darüberhinaus kann der verbesserte triboelektrische Einfluß des Farbmittels zur Verbesserung der Elektreteigenschaften bei eingefärbten (pigmentierten) Elektretmaterialien führen, wobei typische Elektretmaterialien auf Polyolefinen, halogenierten Polyolefinen, Polyacrylaten, Polyacrylnitrilen, Polystyrolen oder Fluorpolymeren, wie beispielsweise Polyethylen, Polypropylen, Polytetrafluorethylen und perfluoriertes Ethylen und Propylen, oder auf Polyestern, Polycarbonaten, Polyamiden, Polyimiden, Polyetherketonen, auf Polyarylensulfiden, insbesondere Polyphenylensulfiden, auf Polyacetalen, Celluloseestern, Polyalkylenterephthalaten sowie Mischungen daraus basieren. Elektretmaterialien haben zahlreiche Einsatzgebiet und können ihre Ladung durch Corona- oder Triboaufladung erhalten (Lit: G.M. Sessier, "Electrets", Topics in Applied Physics, Vol 33, Springer Verlag, New York, Heidelberg, 2nd Ed., 1987).

Des weiteren kann der verbesserte triboelektrische Einfluß des Farbmittels zu verbessertem Trennverhalten von eingefärbten (pigmentierten) Polymeren führen, die nach elektrostatischen Trennverfahren getrennt werden (Y. Higashiyau, J. of Electrostatics, 30, Seiten 203-212, 1993). Dementsprechend ist der triboelektrische Eigeneffekt von Pigmenten auch für die Kunststoffmassenfärbung von Bedeutung. Ebenso ist der triboelektrische Eigeneffekt bei Verfahrens-/Verarbeitungsschritten, bei denen es zu intensivem Reibungskontakt kommt, von Bedeutung, wie z.B. Spinnprozessen, Folienziehprozessen oder weiteren Formgebungsverfahren.

Die vorliegenden Mischkristalle können durch Mischung mit anderen Pigmenten koloristisch nuanciert werden.
Häufig stellt sich die Aufgabe, den Farbton in elektrophotographischen Bunttonern, oder in Ink-Jet-Tinten zu nuancieren und den anwendungspezifischen Anforderungen anzupassen. Hierzu bieten sich insbesondere weitere organische Buntpigmente, anorganische Pigmente sowie Farbstoffe an.
Bevorzugt werden weitere organische Buntpigmente in Mischungen mit den Chinacridon-Mischkristallen in Konzentrationen zwischen 0.01 und 50 Gew.-%, bevorzugt zwischen 0.1 und 25 Gew.-% und besonders bevorzugt zwischen 0,1 % und 15 Gew.-%, bezogen auf das Mischkristall, zur Nuancierung des Farbtons eingesetzt. Hierbei können die weiteren organischen Buntpigmente aus der Gruppe der Azopigmente oder polycyclischen Pigmente sein.
In einer besonders bevorzugten Variante kann ein blaustichiges Magenta-Chinacridon-Mischkristall durch gelbstichige oder karminfarbene Pigment-Typen, wie beispielsweise P.R. 146, P.R. 207, P.R. 209, P.R. 186, P.R. 48 im Sinne einer 2- Komponenten-Mischung nuanciert werden. Mischungen mehrerer Komponenten sind ebenfalls geeignet. Größere Farbton-Schritte sind beispielsweise bei Verwendung von Orange-Pigmenten wie P.O. 62, P.O. 36, P.O. 34, P.O. 13, P.O. 43 oder P.O. 5 oder von Gelb-Pigmenten wie P.Y. 12, 13, 17, 83, 155, 180, 185, 97 möglich.

Die Mischungen können in Form der Pulver, durch Mischen von Preßkuchen, sprühgetrockneten Preßkuchen, Masterbatches sowie durch Dispergieren (Extrusion, Kneten, Walzenstuhlverfahren, Perlmühlen, Ultraturrax) in Gegenwart eines Trägermaterials in fester oder flüssiger Form (Tinten auf wäßriger und nicht-wäßriger Basis) sowie durch Flushen in Gegenwart eines Trägermaterials hergestellt werden.
Wird das Farbmittel mit hohen Wasser- oder Lösemittelanteilen eingesetzt (> 5 %), so kann das Mischen auch in Gegenwart erhöhter Temperaturen und durch Vakuum unterstützt ablaufen.

Insbesondere zur Steigerung der Brillanz sowie teilweise gleichzeitig zur Nuancierung des Farbtones bieten sich Mischungen mit organischen Farbstoffen an. Als solche sind bevorzugt zu nennen:
wasserlösliche Farbstoffe, wie z.B. Direct, Reactive und Acid Dyes, sowie lösemittellösliche Farbstoffe, wie z.B. Solvent Dyes, Disperse Dyes und Vat Dyes. Als Einzelbeispiele seien genannt: C.I. Reactive Yellow 37, Acid Yellow 23, Reactive Red 23, 180, Acid Red 52, Reactive Blue 19, 21, Acid Blue 9, Direct Blue 199, Solvent Yellow 14, 16, 25, 56, 64, 79, 81, 82, 83:1, 93, 98, 133, 162, 174, Solvent Red 8, 19, 24, 49, 89, 90, 91, 109, 118, 119, 122, 127, 135, 160, 195, 212, 215, Solvent Blue 44, 45, Solvent Orange 60, 63, Disperse Yellow 64, Vat Red 41.

Auch können Farbstoffe und Pigmente mit fluoreszierenden Eigenschaften, wie ® Luminole (Riedel-de Haen), in Konzentrationen von 0,0001 bis 30 Gew.-%, bevorzugt von 0,001 bis 15 Gew.-%, ganz besonders bevorzugt zwischen 0,001 und 5 %, bezogen auf den Mischkristall, eingesetzt werden, beispielsweise um fälschungssichere Toner herzustellen.

Anorganische Pigmente, wie beispielsweise TiO₂ oder BaSO_{4,} dienen in Mischungen zur Aufhellung. Weiterhin sind Mischungen von Chinacridonmischkristallen mit Effekt-Pigmenten, wie beispielsweise Perlglanz-Pigmenten, Fe₂O₃-Pigmenten (®Paliochrome) sowie Pigmenten auf Basis cholesterischer Polymere, die in Abhängigkeit vom Beobachtungswinkel unterschiedliche Farbeindrücke ergeben, geeignet.

Die erfindungsgemäß eingesetzten Mischkristalle können auch mit zahlreichen positiv oder negativ steuernden Ladungssteuermitteln, kombiniert werden, um gute anwendungstechnische Aufladbarkeiten zu erzielen. Auch ein gleichzeitiger Einsatz von positiven und negativen Ladungssteuermitteln ist möglich.

Als Ladungssteuermittel kommen beispielsweise in Betracht:
Triphenylmethane; Ammonium- und Immoniumverbindungen; Iminiumverbindungen; fluorierte Ammonium- und fluorierte Immoniumverbindungen; biskationische Säureamide; polymere Ammoniumverbindungen; Diallylammoniumverbindungen; Arylsulfid-Derivate; Phenolderivate; Phosphoniumverbindungen und fluorierte Phosphoniumverbindungen; Calix(n)arene; ringförmig verknüpfte Oligosaccharide (Cyclodextrine) und deren Derivate, insbesondere Borester-Derivate, Interpolyelektrolytkomplexe (IPECs); Polyestersalze; Metallkomplexverbindungen, insbesondere Salicylat-Metall- und Salicylat-Nichtmetallkomplexe, α-Hydroxycarbonsäure-Metall- und -Nichtmetallkomplexe; Benzimidazolone; Azine, Thiazine oder Oxazine, die im Colour Index als Pigments, Solvent Dyes, Basic Dyes oder Acid Dyes aufgeführt sind.

Beispiele für Ladungssteuermittel, die einzeln oder in Kombination miteinander mit dem erfindungsgemäßen Mischkristallpigment kombiniert werden können, sind: Triarylmethan-Derivate wie beispielsweise:
Colour Index Pigment Blue 1, 1:2, 2, 3, 8, 9, 9:1, 10, 10:1, 11, 12, 14, 18, 19, 24, 53, 56, 57, 58, 59, 61, 62, 67 oder beispielsweise Colour Index Solvent Blue 2, 3, 4, 5, 6, 23, 43, 54, 66, 71, 72, 81, 124, 125, sowie die im Colour Index unter Acid Blue und Basic Dye aufgeführten Triarylmethan-Verbindungen, sofern sie hinsichtlich ihrer Temperaturstabilität und Verarbeitbarkeit geeignet sind, wie beispielsweise Colour Index Basic Blue 1, 2, 5, 7, 8, 11, 15, 18, 20, 23, 26, 36, 55, 56, 77, 81, 83, 88, 89, Colour Index Basic Green 1, 3, 4, 9,10, wobei sich wiederum Colour Index Solvent Blue 125, 66 und 124 ganz besonders eignen.
Besonders gut geeignet ist Colour Index Solvent Blue 124 in Form seines hochkristallinen Sulfats oder des Trichlor-triphenylmethyltetrachloraluminats.

Metallkomplexe mit den CAS-Nummern 84179-66-8 (Chromazokomplex), 115706-73-5 (Eisenazokomplex), 31714-55-3 (Chromazokomplex), 84030-55-7 (Chromsalicylatkomplex), 42405-40-3 (Chromsalicylatkomplex) sowie die quaternäre Ammoniumverbindung CAS-Nr. 116810-46-9 sowie Aluminum-Azokomplexfarbstoffe, Metall-Carboxylate und Sulfonate.

Beispiele von für die Herstellung von Elektretfasern gut geeigneten Ladungssteuermitteln der Triphenylmethan-Reihe sind die in der DE-A-1 919 724 und der DE-A-1 644 619 beschriebenen Verbindungen.

Von besonderem Interesse sind Triphenylmethane wie beschrieben in US-A-5 051 585, insbesondere solche der Formel (2) 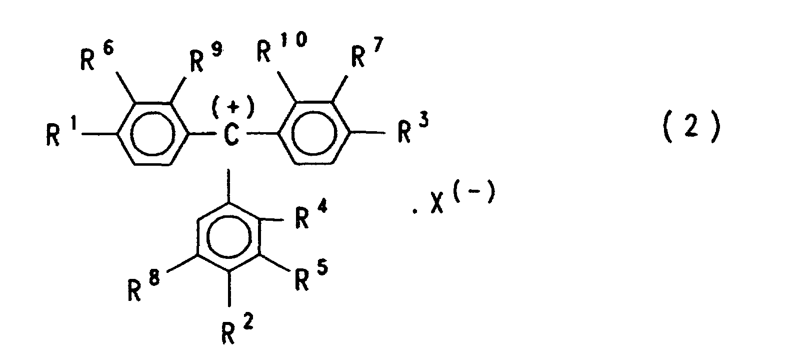 worin R¹ und R³ Phenylaminogruppen, R² eine m-Methylphenylaminogruppe und die Reste R⁴ bis R¹⁰ alle Wasserstoff sind.

Weiterhin geeignet sind Ammonium- und Immoniumverbindungen, wie beschrieben in US-A-5 015 676, sowie fluorierte Ammonium- und Immoniumverbindungen, wie beschrieben in US-A-5 069 994, insbesondere solche der Formel (3) 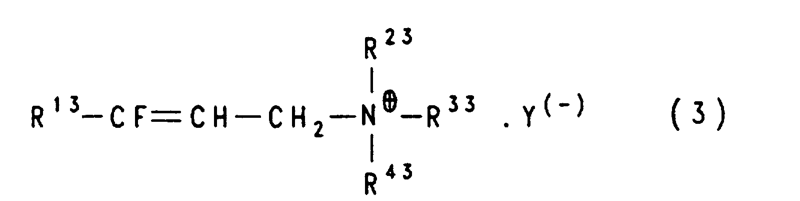 worin
- R¹³: perfluoriertes Alkyl mit 5 bis 11 C-Atomen,
- R²³, R³³ und R⁴³: gleich oder verschieden sind und Alkyl mit 1 bis 5, vorzugsweise 1 bis 2, C-Atomen bedeuten und
- Y⁻: ein stöchiometrisches Äquivalent eines Anions, vorzugsweise eines Tetrafluoroborat- oder Tetraphenylborat-Anions ist.

Weiterhin geeignet sind biskationische Säureamide, wie beschrieben in WO 91/10172, insbesondere solche der Formel (4) 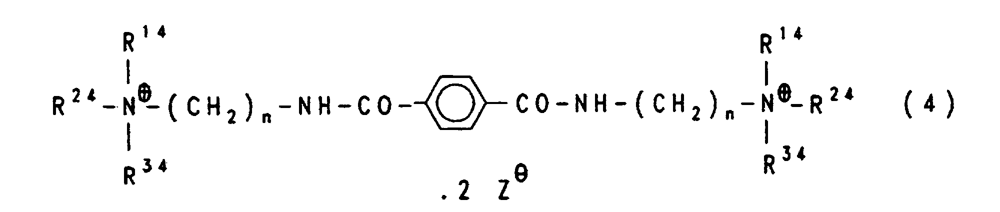 worin
- R¹⁴, R²⁴ und R³⁴: gleiche oder verschiedene Alkylreste mit 1 bis 5 C-Atomen, vorzugsweise Methyl, sind,
- n: für eine ganze Zahl von 2 bis 5 steht, und
- Z⁻: für ein stöchiometrisches Äquivalent eines Anions steht, vorzugsweise für ein Tetraphenylborat-Anion.

Weiterhin geeignet sind Diallylammoniumverbindungen, wie beschrieben in DE-A-4 142 541, insbesondere solche der Formel (5) 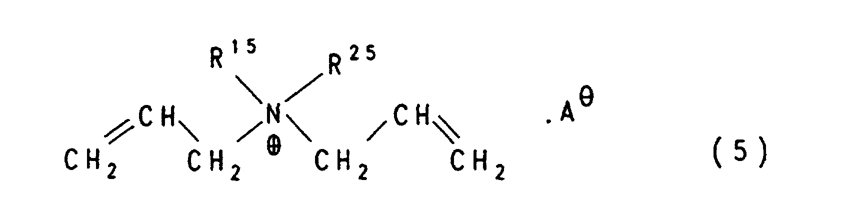 worin
R¹⁵ und R²⁵ gleiche oder verschiedene Alkylgruppen mit 1 bis 5, vorzugsweise 1 oder 2, C-Atomen bedeuten, insbesondere aber für Methylgruppen stehen und
A⁻ für ein stöchiometrisches Äquivalent eines Anions steht, vorzugsweise für ein Tetraphenylborat-Anion steht, sowie die aus diesen erhältlichen polymeren Ammoniumverbindungen der Formel (6), wie beschrieben in DE-A-4 029 652 oder DE-A-4 103 610, 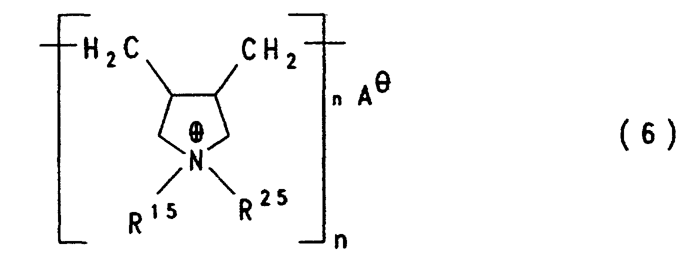 worin n einen Wert hat, der Molekulargewichten von 5000 bis 500000 g/mol, vorzugsweise Molekulargewichten von 40000 bis 400000 g/mol, entspricht.

Weiterhin geeignet sind Arylsulfid-Derivate, wie beschrieben in DE-A-4 031 705, insbesondere solche der Formel (7) 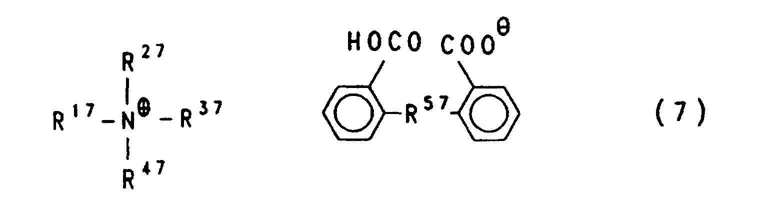 worin
R¹⁷, R²⁷, R³⁷ und R⁴⁷ gleiche oder verschiedene Alkylgruppen mit 1 bis 5, vorzugsweise 2 oder 3, C-Atomen bedeuten, und
R⁵⁷ einer der zweiwertigen Reste -S-, -S-S-, -SO- oder -SO₂- ist.
Beispielsweise sind R¹⁷ bis R⁴⁷ Propylgruppen und R⁵⁷ die Gruppe -S-S-.

Weiterhin geeignet sind Phenolderivate, wie beschrieben in EP-A-0 258 651, insbesondere solche der Formel (8) 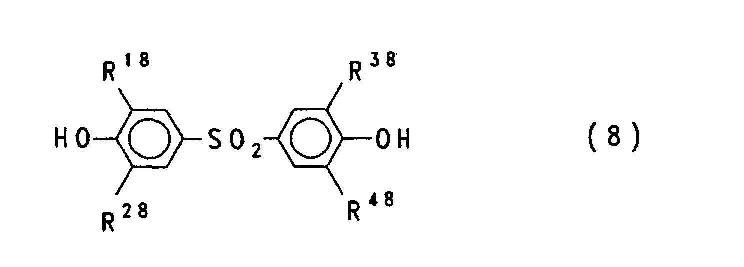 worin
R¹⁸ und R³⁸ Alkyl- oder Alkenylgruppen mit 1 bis 5, vorzugsweise 1 bis 3, C-Atomen, und R²⁸ und R⁴⁸ Wasserstoff oder Alkyl mit 1 bis 3, vorzugsweise Methyl, bedeuten.

Weiterhin geeignet sind Phosphoniumverbindungen und fluorierte Phosphoniumverbindungen, wie beschrieben in US-A-5 021 473 und in US-A-5 147 748.

Weiterhin geeignet sind Calix(n)arene, wie beschrieben in EP-A-0 385 580, EP-A-0 516 434 und in Angew. Chemie (1993), 195, 1258.

Weiterhin geeignet sind Metallkomplexverbindungen, wie Chrom-, Kobalt-, Eisen-, Zink- oder Aluminium-Azokomplexe oder Chrom-, Kobalt-, Eisen-, Zink- oder Aluminium-Salicyl- oder Borsäurekomplexe der Formel (14) 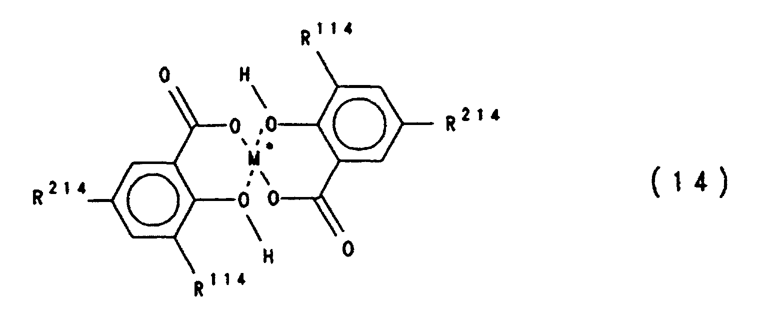 worin
M* ein zweiwertiges Metall-Zentralatom, vorzugsweise ein Chrom, Aluminium-, Eisen-, Bor- oder Zinkatom,
R¹¹⁴ und R²¹⁴ gleiche oder verschiedene, geradkettige oder verzweigte Alkylgruppen mit 1 bis 8, vorzugsweise 3 bis 6, C-Atomen, beispielsweise tert. Butyl, bedeuten.

Weiterhin geeignet sind Benzimidazolone, wie beschrieben in EP-A-0 347 695.

Weiterhin geeignet sind ringförmig verknüpfte Oligosaccharide, wie beschrieben in DE-A-4 418 842, insbesondere solche der Formel (16) 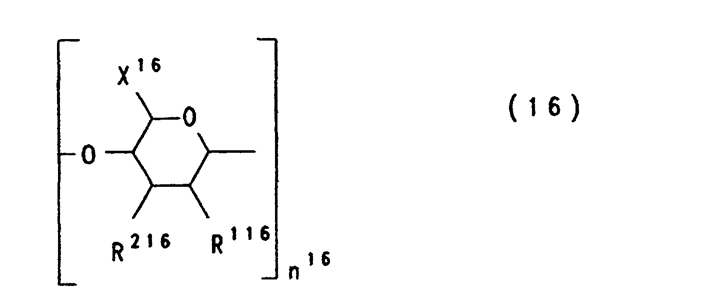 worin n¹⁶ eine Zahl zwischen 3 und 100 ist, R¹¹⁶ und R²¹⁶ die Bedeutung OH, OR³¹⁶, wobei R³¹⁶ substituiertes oder unsubstituiertes Alkyl-(C₁-C₁₈), Aryl-(C₆-C₁₂) oder Tosyl bedeuten, und X¹⁶ die Bedeutung CH₂OH oder CH₂COR³¹⁶ hat. Als Beispiele seien genannt:
n¹⁶ = 6, R¹¹⁶ und R²¹⁶ = OH, X¹⁶ = CH₂OH
n¹⁶ = 7, R¹¹⁶ und R²¹⁶ = OH, X¹⁶ = CH₂OH
n¹⁶ = 8, R¹¹⁶ und R²¹⁶ = OH, X¹⁶ = CH₂OH.

Weiterhin geeignet sind Polymersalze, wie beschrieben in DE-A-4 332 170, deren anionische Komponente ein Polyester ist, der aus dem Reaktionsprodukt der einzelnen Komponenten a), b) und c) sowie gegebenenfalls d) und gegebenenfalls e) besteht, wobei
a) eine Dicarbonsäure oder ein reaktives Derivat einer Dicarbonsäure, welche frei von Sulfogruppen sind,
b) eine difunktionelle aromatische, aliphatische oder cycloaliphatische Sulfoverbindung, deren funktionelle Gruppen Hydroxyl oder Carboxyl, oder Hydroxyl und Carboxyl, sind,
c) ein aliphatisches, cycloaliphatisches oder aromatisches Diol, ein Polyetherdiol oder ein Polycarbonatdiol,
d) eine polyfunktionelle Verbindung (Funktionalität > 2), deren funktionelle Gruppen Hydroxyl oder Carboxyl, oder Hydroxyl und Carboxyl, sind und
e) eine Monocarbonsäure ist
und deren kationische Komponente Wasserstoffatome oder Metallkationen sind.

Weiterhin geeignet sind Cyclooligosaccharid-Verbindungen, wie sie beispielsweise in der DE-A-1 971 1260 beschrieben sind, die durch Umsetzung eines Cyclodextrins oder Cyclodextrin-Derivates mit einer Verbindung der Formel 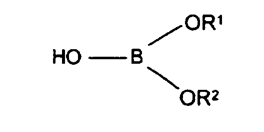 erhältlich sind, worin R¹ und R² Alkyl, bevorzugt C₁-C₄-Alkyl, bedeuten.

Weiterhin geeignet sind Inter-Polyelektrolyt-Komplexe, wie sie beispielsweise in der DE-A-197 32 995 beschrieben sind. Besonders geeignet sind hierbei Verbindungen, die ein Molverhältnis von polymeren kationischen zu polymeren anionischen Gruppen von 0,9:1,1 bis 1,1:0,9 haben.

Weiterhin geeignet, insbesondere bei Anwendung von Chinacridonmischkristallen in Flüssigtonern (Handbook of Imaging Materials, 1991, Marcel Dekker, Inc. Kap. 6 Liquid Toner Technology), sind oberflächenaktive, ionische Verbindungen und sogenannte Metallseifen.

Besonders geeignet sind alkylierte Arylsulfonate, wie Bariumpetronate, Calciumpetronate, Bariumdinonylnaphthalensulfonate (basisch und neutral), Calciumdinonylsulfonat oder Dodecylbenzolsulfonsäure-Na-salz und Polyisobutylensuccinimide (Chevrons Oloa 1200).

Weiterhin geeignet sind Soyalecithin und N-Vinylpyrrolidon-Polymere. Weiterhin geeignet sind Natriumsalze von phosphatierten Mono- und Diglyceriden mit gesättigten und ungesättigten Substituenten, AB- Diblockcopolymere von A: Polymere von 2-(N;N)di-methylaminoethyl-methacrylat quarternisiert mit Methyl-p-toluolsulfonat, und B: Poly-2-ethylhexylmethacrylat.

Weiterhin geeignet, insbesondere in Flüssigtonern, sind di- und trivalente Carboxylate, insbesondere Aluminium-tristearat, Bariumstearat, Chromstearat, Magnesiumoktat, Calziumstearat, Eisennaphthalit und Zinknaphthalit.

Weiterhin sind geeignet chelatisierende Ladungssteuermittel, wie in EP 0 636 945 A1 beschrieben, metallische (ionische) Verbindungen, wie in EP 0 778 501 A1 beschrieben, Phosphat-Metallsalze, wie in JA 9 (1997)-106107 beschrieben, Azine der folgenden Color-Index-Nummern: C.I. Solvent Black 5, 5:1, 5:2, 7, 31 und 50; C.I. Pigment Black 1, C.I. Basic Red 2 und C.I. Basic Black 1 und 2.

Die Kombination von Chinacridon-Mischkristall und Ladungssteuermittel kann durch physikalisches Mischen, während der Mischkristallherstellung, während des Finishvorganges oder durch entsprechendes Aufziehen auf die Mischkristall-Pigmentoberfläche (Pigmentcoating) erfolgen. Beide Komponenten können auch vorteilhaft bei Polymerisationstonern, bei denen das Bindemittel in Gegenwart des Chinacridon-Mischkristall-Pigments und des Ladungssteuermittels polymerisiert wird, zugesetzt werden oder bei der Herstellung von Flüssigtonern in hochsiedenden inerten Lösemitteln, wie Kohlenwasserstoffen, eingesetzt werden.

Gegenstand der Erfindung ist daher auch ein elektrophotographischer Toner oder Entwickler, enthaltend ein Tonerbindemittel, 0,1 bis 60 Gew.-%, vorzugsweise 0,5 bis 20 Gew.-%, an gegebenenfalls nuanciertem Mischkristall-Pigment und 0 bis 20 Gew.-%, vorzugsweise 0,1 bis 5 Gew.-%, jeweils bezogen auf das Gesamtgewicht des Toners oder Entwicklers, eines Ladungssteuermittels aus der Klasse der Triphenylmethane, Ammonium- und Immoniumverbindungen; fluorierten Ammonium- und Immoniumverbindungen; biskationischen Säureamide; polymeren Ammoniumverbindungen; Diallylammoniumverbindungen; Arylsulfid-Derivate; Phenolderivate; Phosphoniumverbindungen und fluorierten Phosphoniumverbindungen; Calix(n)arene; Cyclodextrine; Polyestersalze; Metallkomplexverbindungen; Cyclooligosaccharid-Borkomplexe, Inter-Polyelektrolyt-Komplexe; Benzimidazolone; Azine, Thiazine oder Oxazine.

Es können auch weitere Komponenten dem Toner zugegeben werden, wie Wachse, die tierischer, pflanzlicher oder mineralischer Herkunft sein können, künstliche Wachse oder Mischungen davon. Als Wachse werden Stoffe verstanden, die bei 20°C knetbar, fest bis brüchig hart, grob bis feinkristallin, durchscheinend bis opaque, jedoch nicht glasartig sind. Weiterhin kann dem Mischkristall-Pigment im Toner ein Lichtschutzmittel zugegeben werden. Nachträglich können zum Toner auch Free Flow Agents, wie TiO₂ oder hochdisperse Kieselsäure, beigegeben werden.

Besonders bevorzugt sind elektrophotographische Toner oder Entwickler, die als Ladungssteuermittel annähernd farblose Verbindungen enthalten. Auch die Ladungssteuermittel können dem Pigment als feuchter Preßkuchen, Masterbatch oder Pulver beigemischt werden. Bevorzugt sind Mischungen mit den Verbindungen der vorstehend genannten Formel (3); der vorstehend genannten Formel (5), worin R¹⁵ und R²⁵ jeweils Methyl und A⁶ ein Tetraphenylborat-Anion ist;
der vorstehend genannten Formel (6), worin R¹⁵ und R²⁵ jeweils Methyl, A⁶ ein Tetraphenylborat-Anion ist und n einen Wert hat, der Molekulargewichten von 5000 bis 500 000 g/mol entspricht; der vorstehend genannten Formel (7);
der vorstehend genannten Formel (14);
oder mit einem vorstehend genannten Polymersalz, dessen anionische Komponente ein Polyester ist.

Das erfindungsgemäß verwendete Chinacridon-Mischkristall-Pigment wird zweckmäßigerweise in einer Konzentration von 0,1 bis 60 Gew.-%, vorzugsweise von 0,5 bis 20 Gew.-%, besonders bevorzugt von 0,1 bis 5,0 Gew.-%, bezogen auf die Gesamtmischung, in das Bindemittel des jeweiligen Toners (flüssig oder trocken), Entwicklers, Elektretmaterials oder des elektrostatisch zu trennenden Polymers homogen, beispielsweise durch Extrudieren oder Einkneten, eingearbeitet oder dem Polymerisationsvorgang des Bindemittels zugesetzt. Dabei können das Mischkristall-Pigment als auch die vorstehend erwähnten Ladungssteuermittel als getrocknete und gemahlene Pulver, Dispersionen oder Suspensionen, z.B. in organischen und/oder anorganischen Lösungsmitteln, Preßkuchen (der z.B. zum sogenannten Flush-Verfahren eingesetzt werden kann), sprühgetrocknete Preßkuchen, wie nachstehend beschrieben, Masterbatch, Präparation, angeteigte Paste, als auf geeignete Träger, wie z.B. Kieselgur, TiO₂, Al₂O₃, aus wäßriger oder nicht-wäßriger Lösung aufgezogene Verbindung oder in sonstiger Form zugegeben werden. Der Mischkristall-Pigmentgehalt im Preßkuchen und Masterbatch beträgt üblicherweise zwischen 5 und 70 Gew.-%, vorzugsweise zwischen 20 und 50 Gew.-%. Darüberhinaus kann das Mischkristall-Pigment auch als hochkonzentrierter, insbesondere als sprühgetrockneter Preßkuchen eingesetzt werden, wobei hier der Pigmentgehalt zwischen 25 und 95 Gew.-%, bevorzugt zwischen 50 und 90 Gew.-%, liegt. Die Herstellung des sprühgetrockneten Preßkuchens kann nach üblichen Methoden erfolgen.

Die Höhe der elektrostatischen Aufladung der elektrophotographischen Toner, in welche das erfindungsgemäße Pigment homogen eingearbeitet wird, kann nicht vorhergesagt werden und wird an Standardtestsystemen unter gleichen Bedingungen (gleiche Dispergierzeiten, gleiche Teilchengrößenverteilung, gleiche Teilchenform) bei etwa 20°C und 50 % relativer Luftfeuchte gemessen. Die elektrostatische Aufladung des Toners erfolgt durch Verwirbelung mit einem Carrier, d.h. einem standardisierten Reibungspartner (3 Gewichtsteile Toner auf 97 Gewichtsteile Carrier), auf einer Rollbank (150 Umdrehungen pro Minute). Anschließend wird an einem üblichen q/m-Meßstand die elektrostatische Aufladung gemessen (J.H. Dessauer, H.E. Clark, "Xerography and related Processes", Focal Press, N.Y., 1965, Seite 289; J.F. Hughes, "Electrostatic Powder Coating", Research Studies Press Ltd. Letchworth, Hertfordshire, England, 1984, Chapter 2).

Die Transparenz des Chinacridon-Mischkristall-Pigments in Tonerbindemittelsystemen wird wie folgt untersucht: In 70 Gew.-Teile eines Rohfirnis (bestehend aus 15 Gew.-Teilen des jeweiligen Tonerharzes und 85 Gew.-Teilen Ethylacetat) werden 30 Gew.-Teile des pigmentierten Testtoners mit einem Dissolver eingerührt (5 min bei 5000 upm).
Der so erzeugte Testtonerfirnis wird gegen einen gleichermaßen erzeugten Standardpigmentfirnis mit einem Handcoater auf geeignetes Papier (z.B. Buchdruckpapier) aufgerakelt. Eine geeignete Rakelgröße ist z.B. K bar N 3 (= 24 µm Rakelschichtdicke). Das Papier hat zur besseren Bestimmung der Transparenz einen schwarzen Balken aufgedruckt, die Transparenzunterschiede in dL-Werten werden nach DIN 55 988 bestimmt, bzw. nach der Prüfvorschrift Marketing Pigmente, Clariant GmbH "Visuelle und Farbmetrische Bewertung von Pigmenten" Ausgabe 3, 1996 (Nr. 1/1) bewertet.

Weiterhin wurde gefunden, daß die Chinacridon-Mischkristall-Pigmente als Farbmittel in Ink-Jet-Tinten auf wäßriger (einschließlich Mikroemulsionstinten) und nicht-wäßriger ("solvent-based") Basis, sowie in solchen Tinten, die nach dem Hotmelt-Verfahren arbeiten, geeignet sind.

Mikroemulsionstinten basieren auf organischen Lösemitteln, Wasser und ggf. einer zusätzlichen hydrotropen Substanz (Grenzflächenvermittler). Tinten auf nichtwäßriger Basis enthalten im wesentlichen organische Lösemittel und ggf. eine hydrotrope Substanz.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt.

Gegenstand der Erfindung ist auch eine Hot-Melt Ink-Jet-Tinte, bestehend im wesentlichen aus 20 bis 90 Gew.-% Wachs und 1 bis 10 Gew.-% des Chinacridon-Mischkristall-Pigments. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein. Typische Zusatzstoffe und Hilfsmittel sind z.B. in US-PS 5,560,760 beschrieben.

Gegenstand der vorliegenden Erfindung sind auch Ink-Jet-Aufzeichnungsflüssigkeiten, welche eines oder mehrere der Chinacridon-Mischkristall-Pigmente enthalten.
Die fertigen Aufzeichnungsflüssigkeiten enthalten im allgemeinen insgesamt 0,5 bis 15 Gew.-%, vorzugsweise 1,5 bis 8 Gew.-%, (trocken gerechnet) Chinacridon-Mischkristall-Pigmente.

Mikroemulsionstinten enthalten 0,5 bis 15 Gew.-%, vorzugsweise 1,5 bis 8 Gew.-%, eines Chinacridon-Mischkristall-Pigmentes, 5 bis 99 Gew.-% Wasser und 0,5 bis 94,5 Gew.-% organisches Lösungsmittel und/oder hydrotrope Verbindung.

"Solvent based" Ink-Jet-Tinten enthalten vorzugsweise 0,5 bis 15 Gew.-% eines Chinacridon-Mischkristall-Pigments, 85 bis 94,5 Gew.-% organisches Lösungsmittel und/oder hydrotrope Verbindungen.
Zur Herstellung der Aufzeichnungsflüssigkeiten benutztes Wasser wird vorzugsweise in Form von destilliertem oder entsalztem Wasser eingesetzt.

Bei den in den Aufzeichnungsflüssigkeiten enthaltenen Lösungsmitteln kann es sich um ein organisches Lösungsmittel oder um ein Gemisch derartiger Lösungsmittel handeln. Geeignete Lösungsmittel sind beispielsweise ein- oder mehrwertige Alkohole, deren Ether und Ester, z.B. Alkanole, insbesondere mit 1 bis 4 C-Atomen, wie z.B. Methanol, Ethanol, Propanol, Isopropanol, Butanol, Isobutanol; zwei- oder dreiwertige Alkohole, insbesondere mit 2 bis 5 C-Atomen, z.B. Ethylenglykol, Propylenglykol, 1,3-Propandiol, 1,4-Butandiol, 1,5-Pentandiol, 1,6-Hexandiol, 1,2,6-Hexantriol, Glycerin, Diethylenglykol, Dipropylenglykol, Triethylenglykol, Polyethylenglykol, Tripropylenglykol, Polypropylenglykol; niedere Alkylether von mehrwertigen Alkoholen, wie z.B. Ethylenglykolmono-methyl-, -ethyl- oder -butylether, Triethylenglykol-mono-methyl- oder -ethyl-ether; Ketone und Ketonalkohole wie z.B. Aceton, Methylethylketon, Diethylketon, Methylisobutylketon, Methylpentylketon, Cyclopentanon, Cyclohexanon, Diacetonalkohol; Amide, wie z.B. Dimethylformamid, Dimethylacetamid, N-Methylpyrrolidon, Toluol und n-Hexan.

Als hydrotrope Verbindungen, die gegebenenfalls auch als Lösungsmittel dienen, können beispielsweise Formamid, Harnstoff, Tetramethylharnstoff, ε-Caprolactam, Ethylenglykol, Diethylenglykol, Triethylenglykol, Polyethylenglykol, Butylglykol, Methylcellosolve, Glycerin, N-Methylpyrrolidon, 1,3-Diethyl-2-imidazolidinon, Thiodiglykol, Natrium-Benzolsulfonat, Na-Xylolsulfonat, Na-Toluolsulfonat, Natrium-Cumolsulfonat, Na-Dodecylsulfonat, Na-Benzoat, Na-Salicylat oder Natrium-Butylmonoglykolsulfat eingesetzt werden.

Weiterhin können die erfindungsgemäßen Aufzeichnungsflüssigkeiten noch übliche Zusatzstoffe enthalten, beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit.

Amine, wie z.B. Ethanolamin, Diethanolamin, Triethanolamin, N,N-Dimethylethanolamin oder Diisopropylamin, dienen hauptsächlich zur Erhöhung des pH-Wertes der Aufzeichnungsflüssigkeit. Sie sind normalerweise zu 0 bis 10 Gew.-%, vorzugsweise 0,5 bis 5 Gew.-% in der Aufzeichnungsflüssigkeit vorhanden.

Die erfindungsgemäßen Ink-Jet-Tinten können hergestellt werden, indem die Chinacridon-Mischkristall-Pigmente als Pulver, als wäßrige oder nicht-wäßrige Präparation, als Suspension oder als Preßkuchen in das Mikroemulsionsmedium oder in das nicht-wäßrige Medium oder in das Wachs zur Herstellung einer Hot-Melt Ink-Jet-Tinte eindispergiert wird. Der Preßkuchen kann auch ein hochkonzentrierter, insbesondere sprühgetrockneter, Preßkuchen, sein.

Darüber hinaus sind die Chinacridon-Mischkristall-Pigmente auch geeignet als Farbmittel für Farbfilter, sowohl für die subtraktive wie für die additive Farberzeugung (P. Gregory "Topics in Applied Chemistry: High Technology Application of Organic Colorants" Plenum Press, New York 1991, S. 15 - 25).

In den nachfolgenden Beispielen bedeuten Teile Gewichtsteile und Prozent Gewichtsprozent.

### Synthesebeispiel 1

In ein Druckgefäß werden 392 Teile Polyphosphorsäure, die 85,0 % P₂O₅ enthält, eindosiert. Danach werden 70,5 Teile 2,5-Dianilinoterephthalsäure und 7,8 Teile 2,5-Di-(4-toluidino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1762 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallpigment abgesaugt, mit Wasser neutral gewaschen und bei 80 °C getrocknet. Man erhält 70,2 Teile Mischkristallpigment. Es liegt das Spektrum des Mischkristallpigments vor. Dieses Spektrum unterscheidet sich vom Spektrum des unsubstituierten Chinacridons der β-Phase durch einen zusätzlichen Reflex bei 13,73° (2θ). Die typischen Reflexe des 2,9-Dimethylchinacridons bei 11,05 und 25,31 ° (2θ) sind nicht nachweisbar.

### Synthesebeispiel 2

9 Teile Mischkristallpigment, hergestellt gemäß Synthesebeispiel 1, und 1 Teil Pigmentdispergator mit der allgemeinen Formel (II) werden mechanisch gemischt. In dieser Formel (II) bedeutet P den Rest des linearen, unsubstituierten Chinacridons und X eine Gruppe der Formel -SO₂-NH-(CH₂)₃-N(C₂H₅)₂.

### Synthesebeispiel 3

In ein Druckgefäß werden 382 Teile Polyphosphorsäure, die 85,0 % P₂O₅ enthält, eindosiert. Danach werden 64,9 Teile 2,5-Dianilinoterephthalsäure und 11,5 Teile 2,5-Di-(4-toluidino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1721 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallpigment abgesaugt, mit Wasser neutral gewaschen und bei 80 °C getrocknet. Man erhält 68,6 Teile Mischkristallpigment. Es liegt das Spektrum des Mischkristallpigments vor. Die typischen Reflexe des 2,9-Dimethylchinacridons sind nicht nachweisbar.

### Synthesebeispiel 4

Es wird wie in Synthesebeispiel 3 verfahren, wobei die 68,6 Teile Mischkristallpigment einem Isobutanol-Finish unterzogen werden: Das Mischkristallpigment wird mit 411,6 Teilen Wasser und 411,6 Teilen Isobutanol (100 %) versetzt, bei 150°C für 5 Stunden gerührt und anschließend das Isobutanol abdestilliert.

### Elektrostatische Eigenschaften

### Anwendungsbeispiel 1

5 Teile des Mischkristallpigmentes aus Synthesebeispiel 1 werden als Pulver oder als eine entsprechende Menge Preßkuchen mittels eines Kneters innerhalb von 30 Minuten in 95 Teile eines Tonerbindemittels (Polyester auf Bisphenol-A-Basis, ®Almacryl T500) homogen eingearbeitet. Anschließend wird auf einer Labor-Universalmühle gemahlen und dann auf einem Zentrifugalsichter klassifiziert. Die gewünschte Teilchenfraktion (4 bis 25 µm) wird mit einem Carrier aktiviert, der aus mit Silikon beschichteten Ferrit-Teilchen der Größe 50 bis 200 µm (Schüttdichte 2,75 g/cm³) besteht (FBM 96 - 100; Fa. Powder Techn.).

Die Messung erfolgt an einem üblichen q/m-Meßstand. Durch Verwendung eines Siebes mit einer Maschenweite von 25 µm wird sichergestellt, daß bei den Tonerausblasungen kein Carrier mitgerissen wird. Die Messungen erfolgen bei ca. 50 %iger relativer Luftfeuchte. In Abhängigkeit von der Aktivierdauer werden folgende q/m-Werte [µC/g] gemessen:

| Aktivierdauer | Aufladung q/m [µC/g] |
|---|---|
| 10 Min. | -15 |
| 30 Min. | -12 |
| 2 Std. | -12 |
| 24 Std. | -5 |

### Anwendungsbeispiele 2 bis 8 (Tabelle)

Die Herstellung des Toners und die Messungen erfolgen analog zu Anwendungsbeispiel 1. In allen Beispielen ist der Mischkristallpigment-Anteil, als Trockenmasse gerechnet, 5 %. Der Pigmentgehalt im Preßkuchen (Anwendungsbeispiel 2 und 3) und im Masterbatch (Anwendungsbeispiel 7) ist jeweils 30 %.

In Anwendungsbeispielen 4, 5 und 6 beträgt der Anteil an Ladungssteuermittel im Toner jeweils 1 %, der Anteil des Tonerbindemittels ist dort nur 94 %.

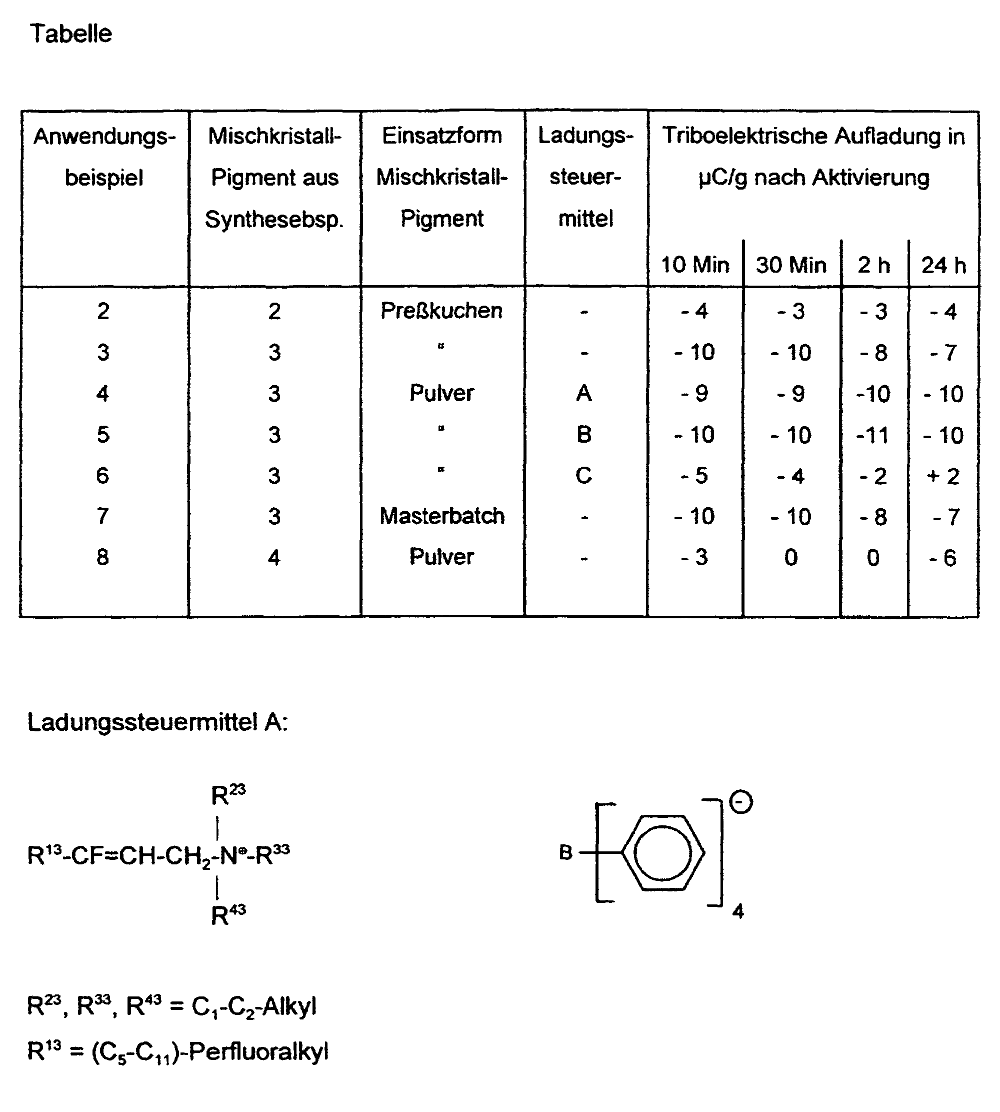

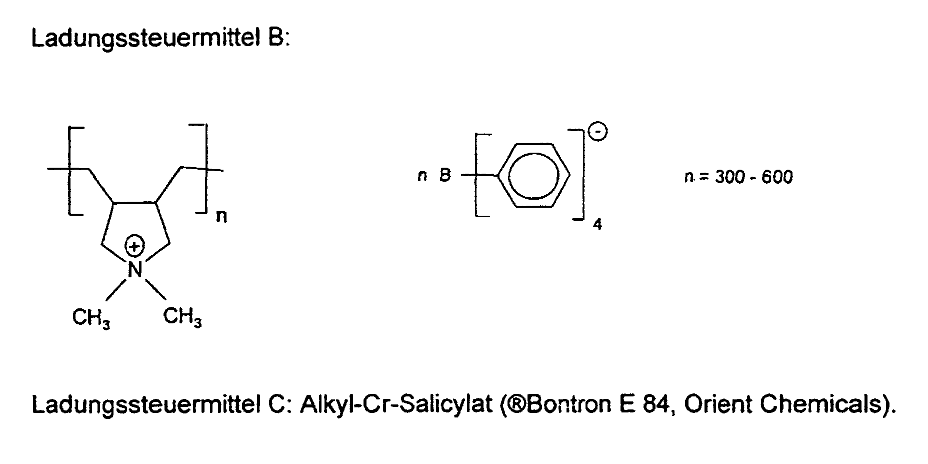

Die Anwendungsbeispiele belegen, daß die erfindungsgemäß verwendeten Chinacridon-Mischkristall-Pigmente eine sehr gute Verträglichkeit mit Ladungssteuermitteln aufweisen. Dies ermöglicht eine Feinjustierung der triboelektrischen Aufladung gemäß den technischen Geräteanforderungen. Schon geringe Mengen (1 %) an Ladungssteuermitteln ergeben eine konstante Langzeitaufladung.

### Transparenz:

Die Transparenz des Toners aus Anwendungsbeispiel 1 wurde vermessen (24 µm Schichtdicke) und mit der Transparenz eines gleichartigen Toners, der jedoch als Farbmittel ein Mischkristall-Pigment gemäß EP-A-0 247 576, Beispiel 3, enthielt, verglichen. Der erfindungsgemäße Testtoner zeigte eine um 3 bis 4 Bewertungsstufen (= deutlich transparenter) erhöhte Transparenz, eine Blauverschiebung des Farbtons und eine höhere Farbstärke.

### Ink-Jet-Tinten auf wäßriger und nichtwäßriger Basis:

### Beispiel 1

10 Teile einer feingemahlenen 50 %igen Pigmentpräparation eines Mischkristallpigments aus Synthesebeispiel 1 auf Basis von VinylchloridNinylacetat-Copolymerisat (z.B. ®Vinol 15/45 Fa.Wacker oder ®Vilith AS 42 Fa. Hüls), wobei eine homogene Pigmentdispersion durch intensives Einkneten in das Copolymerisat erreicht wird, werden unter Rühren in eine Mischung von 80 Teilen Methyl-isobutylketon und 10 Teilen 1,2-Propylenglykol mittels eines Dissolvers eingebracht.

Man erhält eine Ink-Jet-Tinte der folgenden Zusammensetzung:

| | |
|---|---|
| 5 Teile | Mischkristallpigment |
| 5 Teile | Polyvinylchlorid/Polyvinylacetat-Copolymer |
| 10 Teile | 1,2-Propylenglykol |
| 80 Teile | Methyl-iso-butylketon |

### Beispiel 2

Zu 5 Teilen einer Pigmentzubereitung aus Synthesebeispiel 2, die in Form einer 40 %igen ultrafeinen wäßrigen Pigmentpräparation vorliegt, werden unter Rühren (Flügelrührer oder Dissolver) zunächst 75 Teile deionisiertes Wasser und anschließend 6 Teile ®Mowilith DM 760 (Acrylatdispersion), 2 Teile Ethanol, 5 Teile 1,2-Propylenglykol und 0,2 Teile ®Mergal K7 zugegeben.

Man erhält eine Ink Jet Tinte der folgenden Zusammensetzung:
5 Teile Pigmentzubereitung gemäß Synthesebeispiel 2
6 Teile Mowilith DM 760 (Acrylatdispersion)
2 Teile Ethanol

5 Teile 1,2-Propylenglykol
0,2 Teile Mergal K7
81,8 Teile deionisiertes Wasser.

### Beispiel 3

Zu 5 Teilen Mischkristallpigment aus Synthesebeispiel 3, das in Form einer 40 gew.-%igen ultrafeinen wäßrigen Pigmentpräparation vorliegt, werden unter Rühren zunächst 80 Teile deionisiertes Wasser, und anschließend 4 Teile ®Luviskol K30 (Polyvinylpyrrolidon, BASF), 5 Teile 1,2-Propylenglykol und 0,2 Teile Mergal K7 zugegeben.

Man erhält eine Ink-Jet-Tinte der folgenden Zusammensetzung:
5 Teile Mischkristallpigment
4 Teile Luviskol K30 (Polyvinylpyrrolidon)
5 Teile 1,2-Propylenglykol
0,2 Teile Mergal K7
85,8 Teile deionisiertes Wasser.

## Patentansprüche

1. Verwendung von Mischkristallpigmenten der Chinacridonreihe bestehend aus
a) 85 bis 99 Gew.-% an unsubstituiertem Chinacridon der β-Phase der allgemeinen Formel (I), 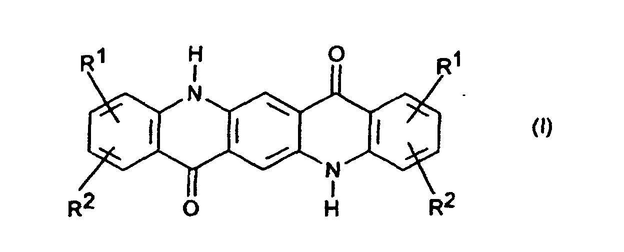 in welcher R¹ und R² Wasserstoffatome bedeuten und
b) 1 bis 15 Gew.-% eines oder mehrerer substituierter Chinacridone der allgemeinen Formel (I), worin die Substituenten R¹ und R² gleich oder verschieden sind und Chlor-, Brom- oder Fluoratome oder C₁-C₄-Alkyl-, C₁-C₄-Alkoxy- oder Carbonamidgruppen, die durch C₁-C₆-Alkylgruppen substituiert sein können, und R¹ zusätzlich Wasserstoff sein kann, bedeuten,
als Farbmittel in elektrophotographischen Tonern und Entwicklern, Ink-Jet-Tinten, Elektretfasern und Farbfiltern.

2. Verwendung nach Anspruch 1, **dadurch gekennzeichnet, daß** das Mischkristallpigment zu 87 bis 95 Gew.-% aus a) und zu 5 bis 13 Gew.-% aus b) besteht.

3. Verwendung nach Anspruch 1 oder 2, **dadurch gekennzeichnet, daß** in b) der Rest R¹ Wasserstoff, Chlor, Methyl oder Carbonamid und der Rest R² Chlor, Methyl oder Carbonamid bedeuten.

4. Verwendung nach mindestens einem der Ansprüche 1 bis 3, **dadurch gekennzeichnet, daß** das Mischkristallpigment mit einem weiteren organischen Buntpigment, einem anorganischen Pigment oder einem Farbstoff nuanciert ist.

5. Verwendung nach mindestens einem der Ansprüche 1 bis 4, **dadurch gekennzeichnet, daß** das Mischkristallpigment in Kombination mit einem Ladungssteuermittel aus der Gruppe der Triphenylmethane, Ammonium- und lmmoniumverbindungen; Iminiumverbindungen; fluorierte Ammonium- und fluorierte Immoniumverbindungen; biskationische Säureamide; polymere Ammoniumverbindungen; Diallylammoniumverbindungen; Arylsulfid-Derivate; Phenolderivate; Phosphoniumverbindungen und fluorierte Phosphoniumverbindungen; Calix(n)arene; ringförmig verknüpfte Oligosaccharide und deren Derivate, insbesondere Borester-Derivate, Interpolyelektrolytkomplexe; Polyestersalze; Metallkomplexverbindungen, insbesondere Salicylat-Metall- und Salicylat-Nichtmetallkomplexe, α-Hydroxycarbonsäure-Metall- und -Nichtmetallkomplexe; Benzimidazolone; Azine, Thiazine oder Oxazine, eingesetzt wird.

6. Verwendung nach mindestens einem der Ansprüche 1 bis 5 in Flüssigtonern oder Pulvertonern.

7. Elektrophotographischer Toner oder Entwickler, enthaltend ein Tonerbindemittel, 0,1 bis 60 Gew.-%, vorzugsweise 0,5 bis 20 Gew.-%, an ggf. nuanciertem Mischkristallpigment nach einem der Ansprüche 1 bis 4 und 0 bis 20 Gew.-%, vorzugsweise 0,1 bis 5 Gew.-%, jeweils bezogen auf das Gesamtgewicht des Toners oder Entwicklers, eines Ladungssteuermittels aus der Klasse der Triphenylmethane, Ammonium- und Immoniumverbindungen; fluorierten Ammonium- und Immoniumverbindungen; biskationischen Säureamide; polymeren Ammoniumverbindungen; Diallylammoniumverbindungen; Arylsulfid-Derivate; Phenolderivate; Phosphoniumverbindungen und fluorierten Phosphoniumverbindungen; Calix(n)arene; Cyclodextrine; Polyestersalze; Metallkomplexverbindungen; Cyclooligosaccharid-Borkomplexe, Inter-Polyelektrolyt-Komplexe; Benzimidazolone; Azine, Thiazine oder Oxazine.

8. Ink-Jet-Tinte, enthaltend 0,5 bis 15 Gew.-% eines Mischkristallpigments nach einem der Ansprüche 1 bis 4.

9. Hot-melt-Ink-Jet-Tinte, bestehend im wesentlichen aus 20 bis 90 Gew.-% Wachs und 1 bis 10 Gew.-% eines Mischkristallpigments nach einein der Ansprüche 1 bis 4.

## Claims

1. The use of mixed-crystal pigments of the quinacridone series consisting of
a) from 85 to 99% by weight of unsubstituted β-phase quinacridone of the formula (I) 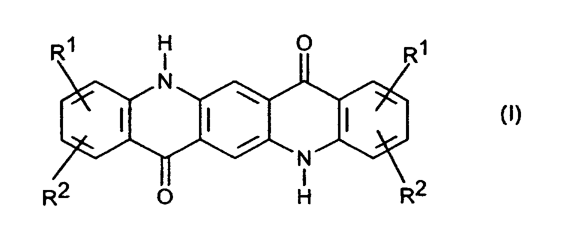 in which R¹ and R² are hydrogen atoms, and
b) from 1 to 15% by weight of one or more substituted quinacridones of the formula (I) in which the substituents R¹ and R² are identical or different and are chlorine, bromine or fluorine atoms or C₁-C₄-alkyl, C₁-C₄-alkoxy or carboxamido groups, which can be substituted by C₁-C₆-alkyl groups, and R¹ can additionally be hydrogen,
as colorants in electrophotographic toners and developers, inkjet inks, electret fibers, and color filters.

2. The use as claimed in claim 1, wherein the mixed-crystal pigment consists of from 87 to 95% by weight of a) and from 5 to 13% by weight of b).

3. The use as claimed in claim 1 or 2, wherein the radical R¹ in b) is hydrogen, chlorine, methyl or carboxamido and the radical R² is chlorine, methyl or carboxamido.

4. The use as claimed in at least one of claims 1 to 3, wherein the mixed-crystal pigment is shaded with a further organic color pigment, an inorganic pigment, or a dye.

5. The use as claimed in at least one of claims 1 to 4, wherein the mixed-crystal pigment is used in combination with a charge control agent from the group of the triphenylmethanes, ammonium and immonium compounds; iminium compounds; fluorinated ammonium and fluorinated immonium compounds; biscationic acid amides; polymeric ammonium compounds; diallylammonium compounds; aryl sulfide derivatives; phenol derivatives; phosphonium compounds and fluorinated phosphonium compounds; calix(n)arenes; cyclically linked oligosaccharides and their derivatives, especially boron ester derivatives, interpolyelectrolyte complexes; polyester salts; metal complex compounds, especially salicylate-metal and salicylate-nonmetal complexes, α-hydroxycarboxylic acid-metal and -nonmetal complexes; benzimidazolones; azines, thiazines or oxazines.

6. The use as claimed in at least one of claims 1 to 5 in liquid toners or powder toners.

7. An electrophotographic toner or developer comprising a toner binder, from 0.1 to 60% by weight, preferably from 0.5 to 20% by weight, of shaded or unshaded mixed-crystal pigment as set forth in one of claims 1 to 4, and from 0 to 20% by weight, preferably from 0.1 to 5% by weight, based in each case on the overall weight of the toner or developer, of a charge control agent from the class of the triphenylmethanes, ammonium and immonium compounds; fluorinated ammonium and immonium compounds; biscationic acid amides; polymeric ammonium compounds; diallylammonium compounds; aryl sulfide derivatives; phenol derivatives; phosphonium compounds and fluorinated phosphonium compounds; calix(n)arenes; cyclodextrins; polyester salts; metal complex compounds; cyclooligosaccharide-boron complexes, interpolyelectrolyte complexes; benzimidazolones; azines, thiazines or oxazines.

8. An inkjet ink comprising from 0.5 to 15% by weight of a mixed-crystal pigment as set forth in one of claims 1 to 4.

9. A hot-melt inkjet ink consisting essentially of from 20 to 90% by weight of wax and from 1 to 10% by weight of a mixed-crystal pigment as set forth in one of claims 1 to 4.

## Revendications

1. Utilisation de pigments cristallins mixtes de la série des quinacridones, constitués de
a) 85 à 99 % en poids d'une quinacridone non substituée en phase β, de formule générale (I) 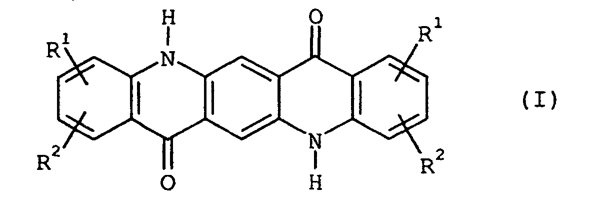 dans laquelle R¹ et R² sont des atomes d'hydrogène, et
b) 1 à 15 % d'une ou plusieurs quinacridones de formule générale (I), dans laquelle les substituants R¹ et R² sont identiques ou différents et représentent des atomes de chlore, de brome ou de fluor ou des groupes alkyle en C₁-C₄, alcoxy en C₁-C₄ ou carboxamido, qui peuvent être substitués par des groupes alkyle en C₁-C₆, et R¹ peut en outre être un atome d'hydrogène,
en tant que substance colorante dans des toners et révélateurs électrophotographiques, dans des encres pour impression au jet d'encre, des fibres à effet électret et des filtres colorés.

2. Utilisation selon la revendication 1, **caractérisée en ce que** le pigment cristallin mixte est constitué de 87 à 95 % en poids de a) et de 5 à 13 % en poids de b).

3. Utilisation selon la revendication 1 ou 2, **caractérisée en ce que**, dans b), le radical R¹ est un atome d'hydrogène ou le groupe chloro, méthyle ou carboxamido, et le radical R² est le groupe chloro, méthyle ou carboxamido.

4. Utilisation selon au moins l'une des revendications 1 à 3, **caractérisée en ce que** le pigment cristallin mixte est nuancé par un autre pigment coloré organique, un pigment inorganique ou un colorant.

5. Utilisation selon au moins l'une des revendications 1 à 4, **caractérisée en ce que** le pigment cristallin mixte est utilisé en combinaison avec un régulateur de charge choisi dans l'ensemble comprenant les triphénylméthanes, les composés de l'ammonium et de l'immonium ; les composés de l'iminium ; les composés de l'ammonium fluorés et de l'immonium fluorés ; les amides d'acides biscationiques ; les composés de l'ammonium polymères ; les composés du diallylammonium ; les dérivés des sulfures d'aryle ; les dérivés du phénol ; les composés du phosphonium et les composés du phosphonium fluorés ; les calix(n)arènes ; les oligosaccharides à liaison cyclique et leurs dérivés, notamment leurs dérivés esters de l'acide borique, les complexes interpolyélectrolytes ; les sels de polyesters ; les composés de complexes métalliques, notamment les complexes salicylate-métal et salicylate-non métal, les complexes acide α-hydroxycarboxylique-métal et -non métal ; les benzimidazolones ; les azines, les thiazines ou les oxazines.

6. Utilisation selon au moins l'une des revendications 1 à 5 dans des toners liquides ou en poudre.

7. Toner ou révélateur électrophotographique, contenant un liant pour toner, 0,1 à 60 % en poids, de préférence 0,5 à 20 % en poids d'un pigment cristallin mixte éventuellement nuancé selon l'une des revendications 1 à 4 et 0 à 20 % en poids, de préférence 0,1 à 5 % en poids, dans chaque cas par rapport au poids total du toner ou du révélateur, d'un régulateur de charge choisi dans l'ensemble comprenant les triphénylméthanes, les composés de l'ammonium et de l'immonium ; les composés de l'ammonium et de l'immonium fluorés ; les amides d'acides biscationiques ; les composés de l'ammonium polymères ; les composés du diallylammonium ; les dérivés des sulfures d'aryle ; les dérivés du phénol ; les composés du phosphonium et les composés du phosphonium fluorés ; les calix(n)arènes ; les cyclodextrines ; les sels de polyesters ; les composés de complexes métalliques; les complexes cyclooligosaccharide-bore, les complexes interpolyélectrolytes ; les benzimidazolones ; les azines, les thiazines ou les oxazines.

8. Encre pour impression au jet d'encre, contenant 0,5 à 15 % en poids d'un pigment cristallin mixte selon l'une des revendications 1 à 4.

9. Encre fusible pour impression au jet d'encre, constituée pour l'essentiel de 30 à 90 % de cire et de 1 à 10 % d'un pigment cristallin mixte selon l'une des revendications 1 à 4.
